# FASCICULE DE BREVET EUROPEEN

(11) **EP 3 549 849 B1**
(45) Date de publication et mention de la délivrance du brevet: **26.08.2020**
(21) Numéro de dépôt: 19166640.3
(22) Date de dépôt: 01.04.2019
(51) Int. Cl.: B62H 1/08, B62H 3/10, B62H 5/10

(54) **DISPOSITIF ANTIVOL POUR BICYCLETTE**
DIEBSTAHLSICHERUNG FÜR FAHRRAD
ANTI-THEFT DEVICE FOR A BICYCLE

(30) Priorité: 06.04.2018 FR 1852999
(43) Date de publication de la demande: 09.10.2019
(73) Titulaire: Design et Mecanique, 38210 Montaud (FR)
(72) Inventeur: HARRIS, Alistair, 38210 MONTAUD (FR)
(74) Mandataire: Prugneau, Philippe

(56) Documents cités:
- GB-A- 2 268 719
- GB-A- 2 544 736
- US-B1- 9 096 182

## Description

### Domaine technique

La présente invention concerne un dispositif antivol pour bicyclette, la bicyclette comprenant une manivelle de pédalier comprenant un corps de manivelle avec une première extrémité reliée à un axe de pédalier et une seconde extrémité reliée à un axe d'une pédale, le dispositif antivol comprenant une première partie d'antivol destinée à être solidarisée au sol et présentant un logement dans lequel vient se placer la manivelle de pédalier et une seconde partie d'antivol formant un verrou amovible qui est destinée à venir coiffer la première partie d'antivol de sorte à verrouiller la manivelle de pédalier dans la première partie d'antivol.

### Technique antérieure

Avec l'augmentation du trafic dans les villes, le déplacement à bicyclette devient une forme de transport privilégiée pour faire des courtes distances. Mais bien que le déplacement à bicyclette présente des avantages, les utilisateurs se préoccupent de savoir comment ils vont pouvoir stationner leur bicyclette de manière sécurisée.

Actuellement, un cadenas est utilisé pour verrouiller une roue de la bicyclette sur le cadre de la bicyclette pour empêcher la rotation de la roue, ou bien pour fixer le cadre de la bicyclette ou la roue à un objet fixe tel qu'un mobilier urbain.

Cependant, le niveau de sécurité de ce moyen de verrouillage est faible puisque des voleurs peuvent dérober les bicyclettes en très peu de temps en détachant les roues de bicyclette ou en sectionnant les cadenas.

Afin de répondre au problème de stationnement sécuritaire, les industriels ont cherché à développer de nouveaux types de dispositif antivol pour bicyclette, soit en proposant d'intégrer un moyen de verrouillage à la bicyclette elle-même, soit en installant des structures fixes saillant du sol dans des espaces publics pour stationner des bicyclettes et les verrouiller par des cadenas conventionnels ou des verrous adaptés.

Le document FR3025774 décrit notamment un dispositif antivol intégré à la bicyclette et dont la finalité est de verrouiller la bicyclette de sorte à empêcher son utilisation normale en cas de vol, par blocage de l'axe du pédalier.

Le document EP0949139 décrit un dispositif antivol fixe, comprenant une structure receveuse solidaire du sol dans laquelle la bicyclette sera insérée pour la maintenir debout, et le dispositif sera verrouillé par un barillet apporté par l'utilisateur. Néanmoins ce genre de dispositif occupe beaucoup d'espace au sol et n'est pas très esthétique.

Le document US 9840855 décrit un autre type de dispositif antivol pour bicyclette. Il concerne un dispositif antivol pour bicyclette pour verrouiller sur une structure solidaire du sol une manivelle de pédalier d'une bicyclette. Les manivelles de pédalier qui servent de transmission principale de la bicyclette et qui relient la pédale à la couronne portant la chaine, ne varient pas beaucoup d'un modèle de bicyclette à un autre. La position centrale de la manivelle de pédalier sur l'ensemble du cadre de la bicyclette est une position privilégiée pour verrouiller une bicyclette en stationnement.

Dans ce dernier document, le dispositif antivol pour bicyclette avec une manivelle de pédalier comprend une première partie d'antivol avec un évidement adapté pour recevoir l'axe du pédalier et une seconde partie d'antivol formant un verrou solidaire de la première partie d'antivol, et pouvant passer d'une position d'attente à une position de verrouillage autour de l'axe du pédalier. Néanmoins, ce dispositif antivol présente une structure et un mécanisme de verrouillage complexes. De plus, selon la taille de la bicyclette, l'axe du pédalier n'est pas toujours à la même hauteur par rapport au sol et l'utilisation de ce genre de dispositif antivol peut demander une certaine dextérité pour maintenir la bicyclette avec l'axe du pédalier logé dans la première partie d'antivol le temps de fermer le verrou de la seconde partie d'antivol.

Le document GB2268719 montre toutes les caractéristiques du préambule de la revendication 1.

### Exposé de l'invention

Le but de l'invention est de proposer un autre dispositif antivol pour bicyclette avec une manivelle de pédalier qui permet d'améliorer la protection contre le vol de bicyclette, qui est facilement utilisable pour la grande majorité des bicyclettes et qui peut être monté sur des infrastructures existantes.

A cet effet, l'invention a pour objet un dispositif antivol pour bicyclette, la bicyclette comprenant une manivelle de pédalier comprenant un corps de manivelle avec une première extrémité reliée à un axe de pédalier et une seconde extrémité reliée à un axe d'une pédale, le dispositif antivol comprenant une première partie d'antivol destinée à être solidarisée au sol et présentant un logement dans lequel vient se placer la manivelle de pédalier et une seconde partie d'antivol formant un verrou amovible qui est destinée à venir coiffer la première partie d'antivol de sorte à verrouiller la manivelle de pédalier dans la première partie d'antivol, caractérisé en ce que le logement est agencé sur une face frontale de la première partie d'antivol et le logement est une rainure dans laquelle le corps de manivelle s'engage à plat en butée lorsque la manivelle de pédalier est orientée vers le haut, et en ce que la seconde partie d'antivol est agencée pour coiffer la seconde extrémité du corps de manivelle et l'axe de la pédale lorsque le corps de manivelle est engagé dans la rainure.

L'invention peut encore présenter les particularités suivantes :
- la première partie d'antivol peut se présenter sous la forme d'un ensemble monobloc comportant sur la face frontale la rainure et sur une face de dessus une surface d'appui destinée à la pédale et un moyen de retenu destiné à l'axe de la pédale de sorte à maintenir la bicyclette en position debout ;
- le moyen de retenu peut être un cavalier en forme de U avec la base du U confondue avec la surface d'appui ;
- l'ensemble monobloc de la première partie d'antivol peut comprendre un récepteur de verrou destiné à coopérer avec le verrou de la seconde partie d'antivol ;
- le récepteur de verrou peut être un orifice s'étendant dans le corps monobloc à partir de la surface d'appui ;
- la seconde partie d'antivol peut se présenter sous la forme d'une plaque de recouvrement profilée en U de sorte que lorsque la seconde partie d'antivol verrouille la manivelle de pédalier, la base du profilé en U coiffe la surface d'appui de la première partie d'antivol, les branches du profilé en U coiffent les accès à l'axe de la pédale ;
- le verrou de la seconde partie d'antivol peut comprendre en outre un doigt de verrou s'étendant perpendiculairement à partir de la base du profilé en U entre les branches du profilé en U et qui est destiné à venir se loger dans le récepteur de verrou de la première partie d'antivol ;
- la seconde partie d'antivol peut se présenter sous la forme d'une plaque de recouvrement profilée en L de sorte que lorsque la seconde partie d'antivol verrouille la manivelle de pédalier, la base du profilé en L coiffe la surface d'appui de la première partie d'antivol, la branche du profilé en L coiffe l'accès à l'axe de la pédale ;
- ledit verrou de ladite seconde partie d'antivol (8) comprend en outre un doigt de verrou (17) s'étendant perpendiculairement à partir de la base dudit profilé en L le long de ladite branche dudit profilé en L et qui est destiné à venir se loger dans ledit récepteur de verrou (13) de ladite première partie d'antivol (7) ;
- la première partie d'antivol peut être destinée à être solidarisée à un bâti fixé au sol ou à toute construction destinée à recevoir la bicyclette.

Avec cet agencement, la manivelle de pédalier de la pédale droite ou gauche peut s'engager dans la rainure, et lorsque la pédale correspondante est retenue par la première partie d'antivol, la bicyclette est stable en position debout même en l'absence de la seconde partie d'antivol de sorte que l'utilisateur peut verrouiller la seconde partie d'antivol sans avoir à tenir la bicyclette.

Selon l'invention, le dispositif antivol assure une meilleure sécurité au vol que les dispositifs antivol de l'art antérieur du fait que le cadre de la bicyclette soit proche du dispositif antivol en position de verrouillage. Ainsi, il est plus difficile de forcer le dispositif antivol de la présente invention que ceux de l'art antérieur.

Avec cet agencement, l'accès à l'axe de la pédale est interdit, de sorte qu'un voleur ne pourra pas démonter la pédale de la manivelle de pédalier afin de libérer la bicyclette du dispositif antivol de l'invention.

### Description sommaire des dessins

La présente invention sera mieux comprise et d'autres avantages apparaîtront à la lecture de la description détaillée des modes de réalisation pris à titre d'exemples nullement limitatifs et illustrés par les dessins annexés dans lesquels :
- les figures 1A et 1B sont des illustrations schématiques de bicyclettes attachées au dispositif antivol selon l'invention respectivement par leur manivelle de pédalier droite et par leur manivelle de pédalier gauche ;
- la figure 2 est une illustration schématique d'un dispositif antivol selon l'invention avec une première partie d'antivol et une seconde partie d'antivol;
- la figure 3 est une illustration schématique d'une première partie d'antivol retenant une manivelle de pédalier droite avant verrouillage ;
- la figure 4A est une illustration schématique d'un dispositif antivol en position ouverte avec une manivelle de pédalier droite de bicyclette prête à être verrouillée et la figure 4B est une illustration schématique d'un dispositif antivol en position verrouillée sur une manivelle de pédalier droite de bicyclette ;
- les figures 5A et 5B illustrent schématiquement un dispositif antivol en coupe en position verrouillée sur une manivelle de pédalier droite de bicyclette ;
- les figures 6A et 6B sont des illustrations schématiques d'un dispositif antivol selon un autre mode de réalisation de l'invention.

### Description des modes de réalisation

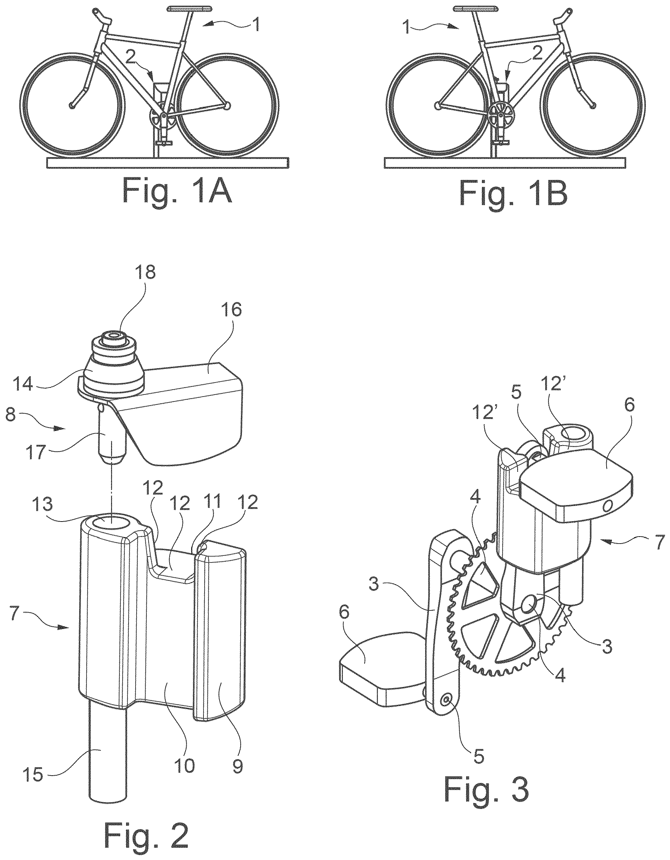

Sur la figure 1A une bicyclette 1 est représentée verrouillée à un dispositif antivol 2 selon l'invention, par l'intermédiaire de sa manivelle de pédalier droite, tandis que sur la figure 1B une bicyclette 1 est verrouillée à un dispositif antivol 2 selon l'invention, par l'intermédiaire de sa manivelle de pédalier gauche.

De manière connue, dans une bicyclette 1, une manivelle de pédalier comprend un corps de manivelle 3 avec une première extrémité reliée à un axe de pédalier 4 et une seconde extrémité reliée à un axe 5 d'une pédale 6.

Comme visible sur la figure 2, le dispositif antivol 2 selon l'invention pour bicyclette comprend une première partie d'antivol 7 et une seconde partie d'antivol 8.

La première partie d'antivol 7 est ici sous forme d'un ensemble monobloc 9, présentant une face frontale avec un logement 10, ici sous forme d'une rainure 10. Sur la figure 3, une manivelle de pédalier droite est placée dans le logement 10. Plus précisément le corps de manivelle 3 est engagé à plat en butée dans la rainure 10 lorsqu'un utilisateur de la bicyclette 1 oriente la manivelle de pédalier droite vers le haut.

La première partie d'antivol 7 présente une face de dessus 11 servant de surface d'appui 11 pour la pédale 6, lorsque la manivelle de pédalier est dans la rainure 10.

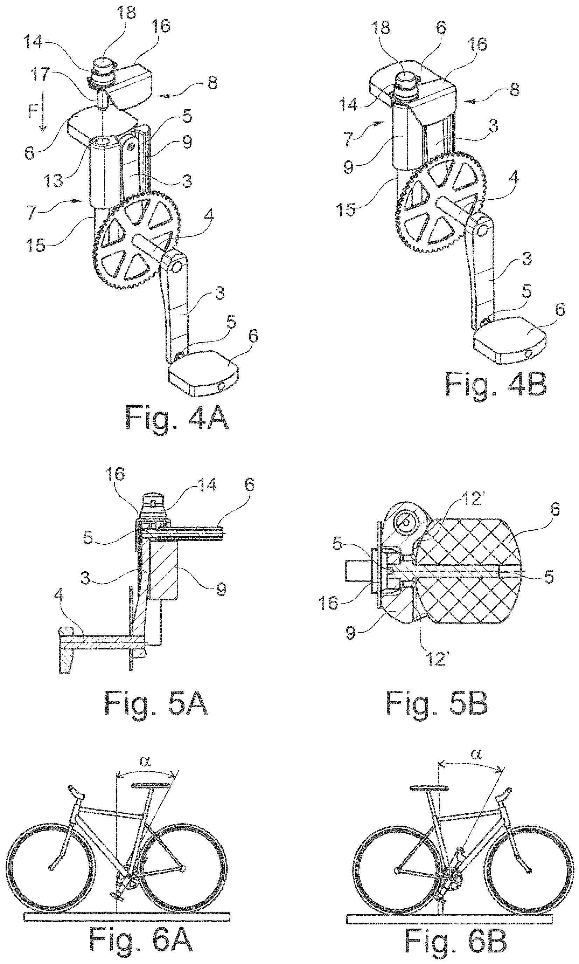

La première partie d'antivol 7 présente aussi sur la face de dessus 11 un moyen de retenu 12, ici représenté sous la forme d'un cavalier 12 en forme de U avec la base du U confondue avec la surface d'appui 11. Ce moyen de retenu 12 est destiné à maintenir la bicyclette 1 de façon stable en position debout lorsque l'axe 5 de la pédale 6, sur la figure 3 la pédale 6 de droite, est positionnée dans le U du cavalier 12. Le U du cavalier 12 présente aussi des faces d'appui 12', visible sur la figure 3 et sur la figure 5B, destinées à empêcher le basculement de la pédale 6 en dehors de la première partie d'antivol 7 et à maintenir la bicyclette 1 en position debout dans l'attente de la mise en place de la seconde partie d'antivol 8. Les dimensions de l'ouverture du U sont choisies de sorte à être supérieures au diamètre de l'axe 5 de pédale 6 et inférieures aux largeurs des pédales des bicyclettes usuelles afin de garantir la compatibilité du dispositif antivol 2 avec la grande majorité des bicyclettes.

Comme visible sur les figures 2 et 3, la première partie d'antivol 7 présente ici un orifice 13 s'étendant dans le corps monobloc 9 à partir de la surface d'appui 11. Cet orifice 13 est un récepteur de verrou 13 destiné à coopérer avec un système de verrouillage de la seconde partie d'antivol 8 comme cela sera expliqué plus loin.

La première partie d'antivol 7 peut être solidarisée à un bâti fixé au sol ou à toute construction destinée à recevoir la bicyclette 1. Ici, elle est solidaire d'un plot 15 qui peut par exemple s'étendre perpendiculairement au sol.

La seconde partie d'antivol 8 se présente ici sous la forme d'une plaque de recouvrement 16 profilée en U avec une base et deux branches (comme visible sur la figure 5A), et un système de verrouillage 14. Comme visible sur les figures 2 et 4A, ici un doigt de verrou 17 s'étend perpendiculairement à partir d'une face de la base du profilé en U entre les branches, alors qu'un verrou 18 est agencé sur l'autre face de la base du profilé en U.

Selon l'invention, comme illustré sur les figures 4A, 4B et 5A, la seconde partie d'antivol 8 est destinée à venir coiffer la première partie d'antivol 7 de sorte à verrouiller la manivelle de pédalier dans la première partie d'antivol 7. Le verrouillage s'effectue par coopération entre le système de verrouillage 14 de la seconde partie d'antivol 8 avec ici son doigt de verrou 17 qui s'insère selon la flèche F dans le récepteur de verrou 13 de la première partie d'antivol 7.

Dans cette position de verrouillage, l'une des branches de la plaque de recouvrement 16 profilée en U recouvre la seconde extrémité du corps de manivelle 3 et l'axe 5 de la pédale 6. Avec cet agencement, on comprendra que la manivelle de pédalier ne peut pas sortir du dispositif antivol par le haut, que le corps de manivelle 3 est bloqué dans la rainure 10, et avantageusement la pédale 6 ne peut pas être démontée de la bicyclette 1 par un voleur car aucun accès à l'axe 5 de la pédale 6 n'est permis. De manière optionnelle, l'autre branche de la plaque de recouvrement 16 recouvre aussi l'axe 5 de la pédale 6 et une partie de la pédale 6, empêchant ainsi le démontage de la pédale 6.

De plus, comme visible sur la figure 4B, en position de verrouillage, de par sa forme en U, la seconde partie d'antivol 8 ne peut pas tourner autour du doigt de verrou 17. En étant bloquée en rotation la propriété antivol du dispositif est améliorée.

Selon un autre mode de réalisation non illustré, la seconde partie d'antivol 8 peut se présenter sous la forme d'une plaque de recouvrement 16' profilée en L avec une base et une branche, la base portant le doigt de verrou 17 et le verrou 18. Dans la position de verrouillage de ce mode de réalisation, la branche de la plaque de recouvrement 16' recouvre la seconde extrémité du corps de manivelle 3 et l'axe 5 de la pédale 6 avec les mêmes avantages que décrits précédemment, notamment de condamner les accès à l'axe 5 de la pédale 6 de façon à en interdire son démontage.

Des moyens de blocage en rotation supplémentaires peuvent être agencés sur la seconde partie d'antivol 8 avec la plaque de recouvrement 16' en forme de L de sorte que la seconde partie d'antivol 8 en position de verrouillage ne puisse pas tourner autour du doigt de verrou 17.

Les figures 6A et 6B illustrent un autre mode de réalisation de l'invention, dans lequel la première partie antivol 7 est solidarisée à un plot qui s'étend perpendiculairement à partir du sol mais via un point d'ancrage incliné d'un angle α par rapport au plot, qui peut aller jusqu'à 30°. Cette inclinaison du dispositif antivol 2 présente l'avantage que l'accessibilité au dispositif antivol 2 est réduite car le dispositif antivol 2 est encore plus proche du cadre de la bicyclette 1 que sur les figures 1A et 1B.

On comprendra aussi, que de part sa configuration, la première partie d'antivol 7 du dispositif antivol 2 selon l'invention ne comprend pas de pièce mobile et est donc de structure simplifiée par rapport à l'état de l'art.

Il va de soi que la présente invention ne saurait être limitée au mode de réalisation exposé plus haut, susceptible de subir des modifications sans pour autant sortir du cadre de l'invention.

## Revendications

1. Dispositif antivol (2) pour bicyclette (1), ladite bicyclette comprenant une manivelle de pédalier comprenant un corps de manivelle (3) avec une première extrémité reliée à un axe de pédalier (4) et une seconde extrémité reliée à un axe (5) d'une pédale (6), ledit dispositif antivol (2) comprenant une première partie d'antivol (7) destinée à être solidarisée au sol avec un logement (10) dans lequel vient se placer ladite manivelle de pédalier et une seconde partie d'antivol (8) formant un verrou amovible qui est destinée à venir coiffer ladite première partie d'antivol (7) de sorte à verrouiller ladite manivelle de pédalier dans ladite première partie d'antivol (7), ledit logement (10) étant agencé sur une face frontale de ladite première partie d'antivol (7) et **caractérisé en ce que** ledit logement (10) est une rainure dans laquelle ledit corps de manivelle (3) s'engage à plat en butée lorsque ladite manivelle de pédalier est orientée vers le haut, et **en ce que** ladite seconde partie d'antivol (8) est agencée pour coiffer ladite seconde extrémité dudit corps de manivelle (3) et ledit axe (5) de ladite pédale (6) lorsque ledit corps de manivelle (3) est engagé dans ladite rainure.

2. Dispositif antivol (2) selon la revendication 1, **caractérisé en ce que** ladite première partie d'antivol (7) se présente sous la forme d'un ensemble monobloc (9) comprenant sur ladite face frontale ladite rainure et sur une face de dessus une surface d'appui (11) destinée à ladite pédale (6) et un moyen de retenu (12) destiné audit axe (5) de ladite pédale (6) de sorte à maintenir ladite bicyclette (1) en position debout.

3. Dispositif antivol (2) selon la revendication 2, **caractérisé en ce que** ledit moyen de retenu (12) est un cavalier en forme de U avec la base du U confondue avec ladite surface d'appui (11).

4. Dispositif antivol (2) selon la revendication 2, **caractérisé en ce que** ledit ensemble monobloc (9) de ladite première partie d'antivol (7) comprend un récepteur de verrou (13) destiné à coopérer avec ledit verrou de ladite seconde partie d'antivol (8) .

5. Dispositif antivol (2) selon la revendication 4, **caractérisé en ce que** ledit récepteur de verrou (13) est un orifice s'étendant dans ledit corps monobloc (9) à partir de la surface d'appui (11).

6. Dispositif antivol (2) selon l'une des revendications précédentes, **caractérisé en ce que** ladite seconde partie d'antivol (8) se présente sous la forme d'une plaque de recouvrement (16) profilée en U de sorte que lorsque ladite seconde partie d'antivol (8) verrouille ladite manivelle de pédalier, la base dudit profilé en U coiffe ladite surface d'appui (11) de ladite première partie d'antivol (7), lesdites branches dudit profilé en U coiffent les accès audit axe (5) de ladite pédale (6).

7. Dispositif antivol (2) selon la revendication 6, **caractérisé en ce que** ledit verrou de ladite seconde partie d'antivol (8) comprend en outre un doigt de verrou (17) s'étendant perpendiculairement à partir de la base dudit profilé en U entre lesdites branches dudit profilé en U et qui est destiné à venir se loger dans ledit récepteur de verrou (13) de ladite première partie d'antivol (7).

8. Dispositif antivol (2) selon l'une des revendications 1 à 5, **caractérisé en ce que** ladite seconde partie d'antivol (8) se présente sous la forme d'une plaque de recouvrement (16') profilée en L de sorte que lorsque ladite seconde partie d'antivol (8) verrouille ladite manivelle de pédalier, la base dudit profilé en L coiffe ladite surface d'appui (11) de ladite première partie d'antivol (7), la branche dudit profilé en L coiffe l'accès audit axe (5) de ladite pédale (6).

9. Dispositif antivol (2) selon la revendication 8, **caractérisé en ce que** ledit verrou de ladite seconde partie d'antivol (8) comprend en outre un doigt de verrou (17) s'étendant perpendiculairement à partir de la base dudit profilé en L le long de ladite branche dudit profilé en L et qui est destiné à venir se loger dans ledit récepteur de verrou (13) de ladite première partie d'antivol (7).

10. Dispositif antivol (2) selon l'une des revendications précédentes, **caractérisé en ce que** ladite première partie d'antivol (7) est destinée à être solidarisée à un bâti fixé au sol ou à toute construction destinée à recevoir ladite bicyclette (1).

## Patentansprüche

1. Diebstahlsicherung (2) für Fahrrad (1), wobei das Fahrrad eine Pedaltretkurbel umfasst, die einen Kurbelkorpus (3) mit einem mit einer Pedalachse (4) verbundenen ersten Ende und einem mit einer Achse (5) einer Pedale (6) verbundenen zweiten Ende umfasst, wobei die Diebstahlsicherung (2) ein zur Festlegung am Boden bestimmtes erstes Diebstahlsicherungsteil (7) mit einer Aufnahme (10), in welche die Pedaltretkurbel platzierbar ist, und ein zweites Diebstahlsicherungsteil (8), das einen entfernbaren Riegel bildet, der dazu bestimmt ist, das erste Diebstahlsicherungsteil (7) derart zu bedecken, dass die Pedaltretkurbel in dem ersten Diebstahlsicherungsteil (7) verriegelt ist, umfasst, wobei die Aufnahme (10) auf einer Stirnseite des ersten Diebstahlsicherungsteils (7) ausgebildet ist und **dadurch gekennzeichnet ist,**
**dass** die Aufnahme (10) eine Kerbe ist, in die der Kurbelkorpus (3) flach anschlagend einsetzbar ist, wenn die Pedaltretkurbel nach oben orientiert ist, und
**dass** das zweite Diebstahlsicherungsteil (8) ausgebildet ist, um das zweite Ende des Kurbelkorpus (3) und die Achse (5) der Pedale (6) zu bedecken, wenn der Kurbelkorpus (3) in die Kerbe eingesetzt ist.

2. Diebstahlsicherung (2) nach Anspruch 1, **dadurch gekennzeichnet, dass** das erste Diebstahlsicherungsteil (7) in der Gestalt einer einteiligen Baueinheit (9) vorgesehen ist, umfassend auf der Stirnseite die Kerbe und auf einer Oberseite eine für die Pedale (6) bestimmte Stützfläche (11) und ein Haltemittel (12), das für die Achse (5) der Pedale (6) bestimmt ist, um das Fahrrad (1) in aufrechter Position zu halten.

3. Diebstahlsicherung (2) nach Anspruch 2, **dadurch gekennzeichnet, dass** das Haltemittel (12) ein U-förmiger Reiter ist, bei dem die Basis des U mit der Stützfläche (11) zusammenfällt.

4. Diebstahlsicherung (2) nach Anspruch 2, **dadurch gekennzeichnet, dass** die einteilige Baueinheit (9) des ersten Diebstahlsicherungsteils (7) eine Aufnahme für einen Riegel (13) umfasst, die dazu bestimmt ist, mit dem Riegel des zweiten Diebstahlsicherungsteils (8) zusammenzuwirken.

5. Diebstahlsicherung (2) nach Anspruch 4, **dadurch gekennzeichnet, dass** die Aufnahme des Riegels (13) eine Öffnung ist, die sich in den einteiligen Korpus (9) ausgehend von der Stützfläche (11) erstreckt.

6. Diebstahlsicherung (2) nach einem der vorhergehenden Ansprüche,
**dadurch gekennzeichnet, dass** das zweite Diebstahlsicherungsteil (8) die Gestalt einer Abdeckplatte (16) mit einem U-Profil derart aufweist, dass wenn das zweite Diebstahlsicherungsteil (8) die Pedaltretkurbel verriegelt, die Basis des U-Profils die Stützfläche (11) des ersten Diebstahlsicherungsteils (7) bedeckt, wobei die Schenkel des U-Profils die Zugänge zu der Achse (5) der Pedale (6) bedecken.

7. Diebstahlsicherung (2) nach Anspruch 6, **dadurch gekennzeichnet, dass** der Riegel des zweiten Diebstahlsicherungsteils (8) ferner einen Riegelzapfen (17) umfasst, der sich quer ausgehend von der Basis des U-Profils zwischen den Schenkeln des U-Profils erstreckt und der dazu bestimmt ist, in die Aufnahme des Riegels (13) des ersten Diebstahlsicherungsteils (7) einzudringen.

8. Diebstahlsicherung (2) nach einem der Ansprüche 1 bis 5, **dadurch gekennzeichnet, dass** das zweite Diebstahlsicherungsteil (8) die Gestalt einer Abdeckplatte (16') mit einem L-Profil derart aufweist, dass wenn das zweite Diebstahlsicherungsteil (8) die Pedaltretkurbel verriegelt, die Basis des L-Profils die Stützfläche (11) des ersten Diebstahlsicherungsteils (7) bedeckt, wobei der Schenkel des L-Profils den Zugang zu der Achse (5) der Pedale (6) bedeckt.

9. Diebstahlsicherung (2) nach Anspruch 8, **dadurch gekennzeichnet, dass** der Riegel des zweiten Diebstahlsicherungsteils (8) ferner einen Riegelzapfen (17) umfasst, der sich quer ausgehend von der Basis des L-Profils entlang des Schenkels des L-Profils erstreckt und der dazu bestimmt ist, in die Aufnahme des Riegels (13) des ersten Diebstahlsicherungsteils (7) einzudringen.

10. Diebstahlsicherung (2) nach einem der vorhergehenden Ansprüche, **dadurch gekennzeichnet, dass** das erste Diebstahlsicherungsteil (7) dazu bestimmt ist, an einem am Boden befestigten Gestell oder an jeder Konstruktion zur Aufnahme des Fahrrads (1) befestigt zu werden.

## Claims

1. Anti-theft device (2) for a bicycle (1), said bicycle comprising a crankset comprising a crank body (3) with a first end connected to a crank axle (4) and a second end connected to an axle (5) of a pedal (6), said anti-theft device (2) comprising a first anti-theft part (7) intended to be secured to the ground with a housing (10) in which is placed said crankset and a second anti-theft part (8) forming a removable latch which is intended to cover said first anti-theft part (7) so as to lock said crankset in said first anti-theft part (7), said housing (10) being arranged on a front face of said first anti-theft part (7), **characterized in that** said housing (10) is a groove in which said crank body (3) engages flat in abutment when said crankset is oriented upwards, and **in that** said second anti-theft part (8) is arranged to cover said second end of said crank body (3) and said axle (5) of said pedal (6) when said crank body (3) is engaged in said groove.

2. Anti-theft device (2) according to claim 1, **characterized in that** said first anti-theft part (7) is in the form of a one-piece assembly (9) comprising on said front face said groove and on a top face a bearing surface (11) intended for said pedal (6) and retaining means (12) intended for said axle (5) of said pedal (6) so as to maintain said bicycle (1) in a standing position.

3. Anti-theft device (2) according to claim 2, **characterized in that** said retaining means (12) is a U-shaped cavalier with the base of the U-shaped merged with said bearing surface (11).

4. Anti-theft device (2) according to claim 2, **characterized in that** said one-piece assembly (9) of said first anti-theft part (7) comprises a latch receiver (13) intended to cooperate with said latch of said second anti-theft part (8).

5. Anti-theft device (2) according to claim 4, **characterized in that** said latch receiver (13) is a hole extending in said one-piece assembly (9) from the bearing surface (11).

6. Anti-theft device (2) according to one of the preceding claims, **characterized in that** said second anti-theft part (8) is in the form of a U-shaped cover plate (16) so that when said second anti-theft part (8) locks said crankset, the base of said U-shaped covers said bearing surface (11) of said first anti-theft part (7), said branches of said U-shaped profile cover the accesses to said axle (5) of said pedal (6).

7. Anti-theft device (2) according to claim 6, **characterized in that** said latch of said second anti-theft part (8) further comprises a latch finger (17) extending perpendicularly from the base of said U-shaped profile between said branches of said U-shaped profile and which is intended to be housed in said latch receiver (13) of said first anti-theft part (7).

8. Anti-theft device (2) according to one of claims 1 to 5, **characterized in that** said second anti-theft part (8) is in the form of an L-shaped cover plate (16') so that when said second anti-theft part (8) locks said clankset, the base of said L-shaped covers said bearing surface (11) of said first anti-theft part (7), the branch of said L-shaped profile covers access to said axle (5) of said pedal (6).

9. Anti-theft device (2) according to claim 8, **characterized in that** said latch of said second anti-theft part (8) further comprises a latch finger (17) extending perpendicularly from the base of said L-shaped along said branch of said L-shaped and which is intended to be received in said latch receiver (13) of said first anti-theft part (7).

10. Anti-theft device (2) according to one of the preceding claims, **characterized in that** said first anti-theft part (7) is intended to be secured to a frame fixed to the ground or to any construction intended to receive said bicycle (1).
